# EUROPEAN PATENT APPLICATION

(11) **EP 3 940 846 A1**
(43) Date of publication of application: **19.01.2022**
(21) Application number: 20186444.4
(22) Date of filing: 17.07.2020
(51) Int. Cl.: H01M 10/056

(54) **SOLID COMPOSITE ELECTROLYTE**

(71) Applicant: Solvay SA, 1120 Bruxelles (BE)
(72) Inventor: FINSY, Vincent, 1500 Halle (BE); MERLO, Luca, 1050 Ixelles (BE)
(74) Representative: Valentino, Cédric

(57) **Abstract**

The present invention relates to a solid composite electrolyte comprising i) at least one polymer; ii) at least one sulfide-based solid ionic conducting inorganic particle; and iii) at least one lithium salt, wherein the i) at least one polymer is selected from the group consisting of (co)polymers having recurring units derived from vinylidene fluoride (VDF), alkylene carbonate, acrylonitrile, silane, fluorosilane, acrylate, caprolactone and blends thereof, and wherein an amount of the ii) at least one sulfide-based solid ionic conducting inorganic particle is from 40.0 to 98.0% by weight (wt%), preferably from 60.0 to 97.0 wt%, and more preferably from 70.0 to 96.0 wt%, based on the total weight of the solid composite electrolyte. The invention also relates to a slurry for manufacturing a solid composite electrolyte comprising i) at least one polymer, ii) at least one sulfide-based solid ionic conducting inorganic particle, iii) at least one lithium salt, and iv) at least one polar aprotic solvent, to a solid state battery comprising the solid composite electrolyte and to use of the solid composite electrolyte in an electrolyte or an electrode of a solid state battery for improving ionic conductivity and mechanical properties.

## Description

### TECHNICAL FIELD

The present invention relates to a solid composite electrolyte comprising i) at least one polymer; ii) at least one sulfide-based solid ionic conducting inorganic particle; and iii) at least one lithium salt, wherein the i) at least one polymer is selected from the group consisting of (co)polymers having recurring units derived from vinylidene fluoride (VDF), alkylene carbonate, acrylonitrile, silane, fluorosilane, acrylate, caprolactone and blends thereof, and wherein an amount of the ii) at least one sulfide-based solid ionic conducting inorganic particle is from 40.0 to 98.0% by weight (wt%), preferably from 60.0 to 97.0 wt%, and more preferably from 70.0 to 96.0 wt%, based on the total weight of the solid composite electrolyte. The invention also relates to a slurry for manufacturing a solid composite electrolyte comprising i) at least one polymer, ii) at least one sulfide-based solid ionic conducting inorganic particle, iii) at least one lithium salt, and iv) at least one polar aprotic solvent, to a solid state battery comprising the solid composite electrolyte and to use of the solid composite electrolyte in an electrolyte or an electrode of a solid state battery for improving ionic conductivity and mechanical properties.

### TECHNICAL BACKGROUND

In recent years, Li-ion batteries have retained dominant position in the market of rechargeable energy storage devices due to their many benefits comprising light-weight, reasonable energy density and good cycle life. Nevertheless, current Li-ion batteries still suffer from poor safety and relatively low energy density with respect to the required energy density for high power applications such as electrical vehicles (EVs), hybrid electrical vehicles (HEVs), grid energy storage, etc. It is the presence of liquid electrolyte that is at the basis of such shortcomings.

In conventional Li-ion batteries, liquid electrolytes based on organic carbonates are mainly used so that Li-ion batteries are inherently prone to undergo leakage and generate volatile gaseous species, which are flammable.

Solid state batteries (SSB) are hence believed to be the next generation of energy storage devices, because they provide higher energy density and are safer than the conventional Li-ion batteries with liquid electrolyte system. In SSB, the highly flammable liquid electrolyte is replaced by a solid electrolyte so that all risk of ignition and/or explosion is to be substantially removed. As solid-state electrolytes, organic polymers, inorganics and composites (inorganic electrolytes dispersed into polymers) have been actively investigated.

Inorganic electrolyte exhibits high ionic conductivity, but poor mechanical properties so that it's brittle. In particular, oxide-based inorganic electrolytes such as the garnet type Li-ion conductive material, e.g., Li₇La₃Zr₂O₁₂ (LLZO), suffer from poor grain boundary conductivity. This is because Li-ion transport is largely hindered at the grain boundaries between the oxide inorganic particles and also at the interfaces between the solid electrolyte and electrodes. Accordingly, these materials rely on sintering processes in order to fuse the grains and subsequently construct a conductive pathway. Only hot pressing has been successful in reducing the sintering duration, but it requires specialized and costly equipment, which is a big obstacle for mass-production at commercial scales. Moreover, thin film formability by hot-pressing has not been demonstrated yet. To the contrary, sulfide-based inorganic electrolytes exhibit high conductivity of above 10⁻⁴ Scm⁻¹ at room temperature and the grain-to-grain contact resistance of sulfide particles may be easily removed by conventional cold pressing. Sintering can be obtained by pressing at relatively low compression and temperature. Nonetheless, the brittleness of thusly-obtained film prevents the possibility to obtain reduced thickness and its use in a certain range of applications.

Solid polymer electrolyte shows good mechanical properties, high flexibility, and processability, but its low ionic conductivity severely restricts its large-scale application. Much efforts have been devoted to the solid polymer electrolytes by combining various kinds of Li salts with polymers. Solid polymer electrolytes based on poly(ethylene oxide) (PEO), polyacrylonitrile (PAN), poly(vinylidene fluoride) (PVDF), and poly(methyl methacrylate) (PMMA) have been mainly investigated. In particular, many efforts have been made with PEO-based solid polymer electrolyte due to its excellent capability to solvate a variety of Li salts by the presence of ether oxygen. However, PEO-based solid polymer electrolytes have not been widely used in commercial Li-ion batteries because of two main drawbacks. First, due to the crystallinity of the polymer, sufficient conductivity can only be obtained at temperatures beyond its melting temperatures so that its applicability is limited to high temperature applications only. Secondly, PEO-based polymer electrolytes show poor oxidative resistance limiting its applicability to lower voltage batteries.

Accordingly, several attempts have been made to overcome the drawbacks of PEO-based solid polymer electrolyte. For instance, US Patent No. 8,431,266 B2 *(Blue Solutions)* discloses the use of two different polymers (i.e., PEO and PVDF) in distinct layers. In addition, WO 2019/053388 A1 *(Blue Solutions)* discloses another initiative of using specific PVDF copolymer to improve the mechanical properties of PEO-based solid polymer electrolyte.

As another approach, composite electrolytes, for instance those comprising sulfide particles dispersed into a polymeric matrix, are considered as being the most promising solution at industrial scale, because there's a chance that they may offer the possibility to combine the high ionic conductivity of the sulfide-based solid electrolyte with the good mechanical properties and processability of the polymers.

Despite the fact that sulfide-based composite electrolytes offer the possibility to solve the drawbacks of other solid electrolytes with interesting ionic conductivity and mechanical property, however, several shortcomings, such as high solvent reactivity still remain to be overcome. The poor solvent compatibility of sulfide materials, restricts largely the selection of the polymers that can be used to fabricate electrolytes. State-of-the-art composite sulfide electrolytes are mainly based on hydrophobic polymers, dissolved in aprotic apolar solvents such as linear hydrocarbons or aromatic hydrocarbons. These binders are ionically non-conductive and as such form an insulating layer on top of and/or in between the different solid electrolyte particles leading to a significant reduction in ionic conductivity, even at low binder contents.

Riphaus et al in Journal of The Electrochemical Society, 165 (16) A3993-A3999 (2018) ("Slurry-Based Processing of Solid Electrolytes: A Comparative Binder Study") produced LSPS composites with a range of non-conductive binders (e.g., PIB (polyisobutene), SBR (styrene butadiene rubber), PEVA (poly(ethylene vinyl acetate), and HNBR (hydrogenated nitrile butadiene rubber)). They have shown that, for a composite electrolyte with as little as 2.5 wt% of a hydrogenated binder (HNBR), a reduction of the ionic conductivity with about 1 order of magnitude was obtained. The composite electrolyte exhibited a conductivity of about 0.3 mS/cm at 25 °C (see supporting information). The ionic conductivity of the compressed powder was estimated to be around 3 mS/cm.

In order to reduce the negative impact of the binder on the ionic conductivity, various attempts have been made to use conductive binders. Accordingly, early initiatives were made to combine PEO-based polymers with sulfide-based solid electrolytes to find an optimal solution without the drawbacks as above described. Nevertheless, it has been found that it's far more complex than expected to manipulate/engineer the surface chemistry between the polymers and sulfide materials.

Riphaus et al. in Journal of The Electrochemical Society, 166(6) A975-A983 (2019) ("Understanding Chemical Stability Issues between Different Solid Electrolytes in All-Solid-State Batteries") investigated the compatibility of the inorganic solid electrolytes Li₁₀SnP₂S₁₂ (LSPS) with PEO-based polymer electrolytes and concluded that the interface between LSPS and PEO is chemically unstable because of surface impurities on pristine LSPS and the hydroxyl end groups in PEO, which are considered to affect the decomposition of LSPS.

Subsequently, another approach to obtain a composite electrolyte comprising sulfide particles and a polymer different from PEO has been made. PVDF-based polymers, notably PVDF-HFP, have been tried in preparing a solid-state electrolyte, because of its wide electrochemical window, high mechanical strength, thermal stability and high dielectric constant.

Cong et al. in Journal of Power Sources, Volume 446 (2020) 227365, recently published, discloses composite electrolytes comprising LGPS, PVDF-HFP, and LiTFSI. Cong et al. proposes to use two distinct types of perfluoropolyether (PFPE) as suitable solvents for dispersing LGPS particles to overcome the deterioration of sulfides which readily occur when dispersing in polar solvents, such as N-methyl-2-pyrrolidinone (NMP), acetone and most of ethers, which are normally used to dissolve polymer matrix. Accordingly, it was demonstrated that PFPEs functionalized as interfacial stabilizers play an important role in avoiding the interfacial detrimental reaction of the composite electrolytes with Li anode and in suppressing the growth of Li dendrite, which improves the cycling performance of SSB employing metallic Li anode. However, Cong et al. had to infiltrate the liquid electrolyte (dimethyl carbonate terminated PFPE with 0.7M LiTFSI) into the composite electrolyte membrane in order to ensure proper ionic conductivity of the composite films. Moreover, Cong et al. only tried low loading of sulfides (10, 20 and 30 wt% of LGPS as inorganic fillers) and concluded that LGPS in a relatively low loading, i.e., 20 wt%, exhibits the best electrochemical behaviours. It can be construed that the conductivity is likely mediated through the gel polymer electrolyte phase.

Further, US 2020/0058940 A1 *(Hyundai Motor Company)* described that a liquid electrolyte needs to be introduced into a LPSC1-NBR based composite electrolyte, forming a gel polymer electrolyte composite. Although a promising ionic conductivity could be obtained, the main organic part in the composite electrolyte is a liquid phase (70%), which means that a liquid electrolyte phase is necessary in order to (fully) exploit the ionic conductivity of solid electrolytes.

There's thus a continuous need in this field for a new solid composite electrolyte comprising a polymer and a sulfide-based solid ionic conducting inorganic particle in higher loadings, compatible with each other, with easier processability and better performance.

### SUMMARY OF THE INVENTION

A first object of the present invention is a solid composite electrolyte comprising
i) at least one polymer;
ii) at least one sulfide-based solid ionic conducting inorganic particle; and
iii) at least one lithium salt,
wherein the i) at least one polymer is selected from the group consisting of (co)polymers having recurring units derived from vinylidene fluoride (VDF), alkylene carbonate, acrylonitrile, silane, fluorosilane, acrylate, caprolactone and blends thereof, and wherein an amount of the ii) at least one sulfide-based solid ionic conducting inorganic particle is from 40.0 to 98.0% by weight (wt%), preferably from 60.0 to 97.0 wt%, and more preferably from 70.0 to 96.0 wt%, based on the total weight of the solid composite electrolyte.

A second object of the present invention is a slurry for manufacturing a solid composite electrolyte comprising i) at least one polymer, ii) at least one sulfide-based solid ionic conducting inorganic particle, iii) at least one lithium salt, and iv) at least one polar aprotic solvent.

A third object of the present invention is a solid state battery comprising the solid composite electrolyte as described above.

A fourth object of the present invention is the use of the solid composite electrolyte as described above, in an electrolyte and/or an electrode of a solid state battery for improving ionic conductivity and mechanical properties.

It was surprisingly found by the inventors that the solid composite electrolyte according to the present invention, comprising i) at least one polymer selected from the group consisting of (co)polymers having recurring units derived from VDF, alkylene carbonate, acrylonitrile, silane, fluorosilane, acrylate, caprolactone and blends thereof, ii) at least one sulfide-based solid ionic conducting inorganic particle in an amount of from 40.0 to 98.0 wt%, preferably from 60.0 to 97.0 wt%, and more preferably from 70.0 to 96.0 wt%, based on the total weight of the solid composite electrolyte and iii) at least one lithium salt, delivers a particularly advantageous combination of properties, e.g., easier processability and better performances including ionic conductivity and mechanical properties.

### BREIF DESCRIPTION OF DRAWINGS

Figure 1 is a cross-section of the pressure cell in AC impedance spectroscopy, developed within Solvay to measure the ionic conductivity of the film. In the pressure cell, the film is pressed between 2 stainless steel electrodes during impedance measurement.
Figure 2 is an equivalent circuit used to model the conductivity behavior of the composite electrolytes. R1 and R2 represent the bulk and grain boundary resistance respectively, and Q2 and Q3 represent the grain boundary and electrode contributions respectively.
Figure 3 is an equivalent circuit used to model the conductivity behavior of the composite electrolytes with a second semicircle.

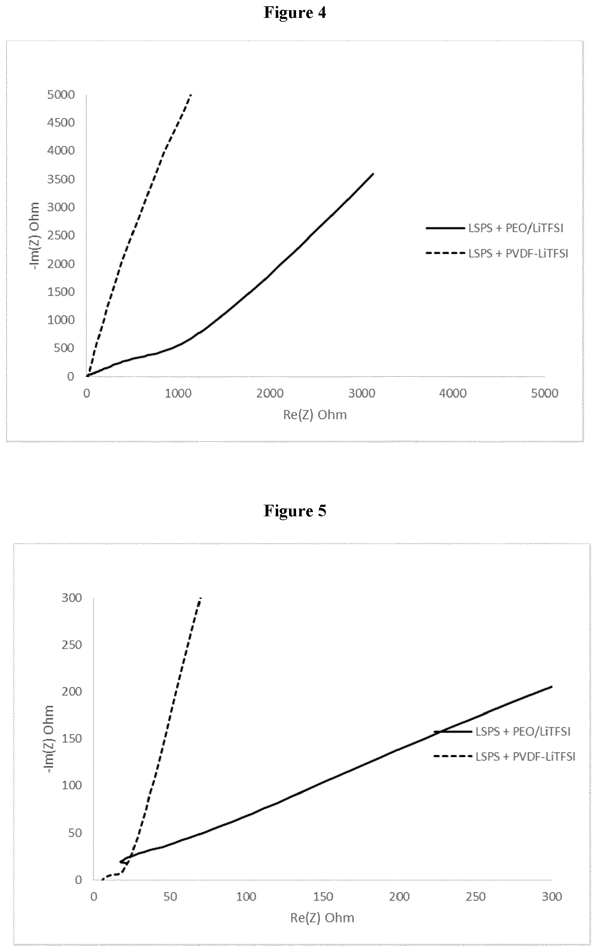

Figure 4 is an impedance curve obtained from a composite film composed of a LSPS solid electrolyte and 11 wt% of a PVDF/LiTFSI polymer electrolyte (dashed line corresponding to Ex 2) or 10 wt% of a PEO/LiTFSI polymer electrolyte (solid line corresponding to CE 2), with x axis up to 5000 Ohm.
Figure 5 is the same impedance curve as Figure 4, but with x axis up to 300 Ohm.

### DETAILED DESCRIPTION OF THE INVENTION

The following constituents of the solid composite electrolyte according to the invention are described hereafter in details. It is to be understood that both the foregoing general description and the following detailed description are exemplary and are intended to provide further explanation of the invention as claimed. Accordingly, various changes and modifications, described herein will be apparent to those of ordinary skill in the art. Moreover, descriptions of well-known functions and constructions may be omitted for clarity and conciseness.

Throughout this specification, unless the context requires otherwise, the word "comprise" or "include", or variations such as "comprises", "comprising", "includes", including" will be understood to imply the inclusion of a stated element or method step or group of elements or method steps, but not the exclusion of any other element or method step or group of elements or method steps. According to preferred embodiments, the word "comprise" and "include", and their variations mean "consist exclusively of'.

As used in this specification, the singular forms "a", "an" and "the" include plural aspects unless the context clearly dictates otherwise. The term "and/or" includes the meanings "and", "or" and also all the other possible combinations of the elements connected to this term.

The term "between" should be understood as being inclusive of the limits.

As used herein, "alkyl" groups include saturated hydrocarbons having one or more carbon atoms, including straight-chain alkyl groups, such as methyl, ethyl, propyl, butyl, pentyl, hexyl, heptyl, octyl, nonyl, decyl, cyclic alkyl groups (or "cycloalkyl" or "alicyclic" or "carbocyclic" groups), such as cyclopropyl, cyclopentyl, cyclohexyl, cycloheptyl, and cyclooctyl, branched-chain alkyl groups, such as isopropyl, tert-butyl, sec-butyl, and isobutyl, and alkyl-substituted alkyl groups, such as alkyl-substituted cycloalkyl groups and cycloalkyl-substituted alkyl groups.

In the present invention, the term "slurry" refers to a mixture of solids denser than water suspended in liquid.

As used herein, the terminology "(Cₙ-Cₘ)" in reference to an organic group, wherein n and m are integers, respectively, indicates that the group may contain from n carbon atoms to m carbon atoms per group.

In the context of the present invention, the term "percent by weight" (wt%) indicates the content of a specific component in a mixture, calculated as the ratio between the weight of the component and the total weight of the mixture. When referred to the recurring units derived from a certain monomer in a polymer/copolymer, percent by weight (wt%) indicates the ratio between the weight of the recurring units of such monomer over the total weight of the polymer/copolymer.

Ratios, concentrations, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a temperature range of about 120°C to about 150°C should be interpreted to include not only the explicitly recited limits of about 120°C to about 150°C, but also to include sub-ranges, such as 125°C to 145°C, 130°C to 150°C, and so forth, as well as individual amounts, including fractional amounts, within the specified ranges, such as 122.2°C, 140.6°C, and 141.3°C, for example.

The present invention provides a solid composite electrolyte comprising
i) at least one polymer;
ii) at least one sulfide-based solid ionic conducting inorganic particle; and
iii) at least one lithium salt,
wherein the i) at least one polymer is selected from the group consisting of (co)polymers having recurring units derived from vinylidene fluoride (VDF), alkylene carbonate, acrylonitrile, silane, fluorosilane, acrylate, caprolactone and blends thereof, and wherein an amount of the ii) at least one sulfide-based solid ionic conducting inorganic particle is from 40.0 to 98.0% by weight (wt%), preferably from 60.0 to 97.0 wt%, and more preferably from 70.0 to 96.0 wt%, based on the total weight of the solid composite electrolyte

### VDF (co)polymer

Vinylidenefluoride polymer (PVDF or VDF polymer) is one of the most widely used fluoropolymers in battery components, due to its high cathodic stability, binding strength and adhesion with current collectors.

In one embodiment, the i) at least one polymer according to the present invention comprises recurring units derived from VDF, i.e., VDF (co)polymer.

In one embodiment, the VDF (co)polymer comprises at least 85% by moles of recurring units being derived from VDF.

In a preferred embodiment, the VDF (co)polymer is a polymer comprising
(a) at least 85 % by moles of recurring units derived from VDF; and
(b) from 0.1 to 15%, preferably from 0.1 to 12%, and more preferably from 0.1 to 10% by moles of recurring units derived from a second monomer different from VDF;
wherein all the aforementioned % by moles is referred to the total moles of recurring units of the VDF (co)polymer.

In another embodiment, the VDF (co)polymer comprises less than 85% by moles of recurring units being derived from VDF.

In another preferred embodiment, the VDF (co)polymer is a polymer comprising
(a) less than 85 % by moles of first recurring units derived from VDF; and
(b) at least 15% by moles of second recurring units derived from a second monomer different from VDF;
wherein all the aforementioned % by moles is referred to the total moles of recurring units of the VDF (co)polymer.

In a preferred embodiment, the second monomer is a fluorinated monomer.

Non-limiting examples of suitable second monomer different from VDF include, notably, the followings:
- C₂-C₈ perfluoroolefins, such as tetrafluoroethylene and hexafluoropropylene (HFP);
- C₂-C₈ hydrogenated fluoroolefins, such as vinyl fluoride, 1,2-difluoroethylene and trifluoroethylene (TrFE);
- perfluoroalkylethylenes of formula CH₂=CH-R_{f0}, wherein R_{f0} is a C₁-C₆ perfluoroalkyl;
- chloro- and/or bromo- and/or iodo-C₂-C₆ fluoroolefins such as chlorotrifluoroethylene;
- (per)fluoroalkylvinylethers of formula CF₂=CFOR_{f1}, wherein R_{f1} is a C₁-C₆ fluoro- or perfluoroalkyl, e.g. CF₃, C₂F₅, C₃F₇;
- CF₂=CFOX₀ (per)fluoro-oxyalkylvinylethers wherein X₀ is a C₁-C₁₂ alkyl group, a C₁-C₁₂ oxyalkyl group or a C₁-C₁₂ (per)fluorooxyalkyl group having one or more ether groups, such as perfluoro-2-propoxy-propyl group;
- (per)fluoroalkylvinylethers of formula CF₂=CFOCF₂OR_{f2}, wherein R_{f2} is a C₁-C₆ fluoro- or perfluoroalkyl group, e.g. CF₃, C₂F₅, C₃F₇ or a C₁-C₆ (per)fluorooxyalkyl group having one or more ether groups such as -C₂F₅-O-CF₃;
- functional (per)fluoro-oxyalkylvinylethers of formula CF₂=CFOY₀, wherein Y₀ is a C₁-C₁₂ alkyl group or (per)fluoroalkyl group, a C₁-C₁₂ oxyalkyl group or a C₁-C₁₂ (per)fluorooxyalkyl group having one or more ether groups and Y₀ comprising a carboxylic or sulfonic acid group, in its acid, acid halide or salt form; - fluorodioxoles, preferably perfluorodioxoles;
- (alkyl) acrylic acid, e.g., acrylic acid, methacrylic acid, hydroxyethyl (meth)acrylate, hydroxypropyl (meth)acrylate, hydroxyethylhexyl (meth)acrylate, methyl methacrylic acid, butyl acrylic acid; and
- hydrogenated monomers denoting an ethylenically unsaturated monomers free of fluorine atom, e.g., ethylene, propylene, vinyl monomers such as vinyl acetate, including styrene and p-methylstyrene.

In a preferred embodiment, said fluorinated monomer is advantageously selected from the group consisting of vinyl fluoride, trifluoroethylene, chlorotrifluoroethylene (CTFE), 1,2-difluoroethylene, tetrafluoroethylene (TFE), hexafluoropropylene (HFP), perfluoro(alkyl)vinyl ethers, such as perfluoro(methyl)vinyl ether (PMVE), perfluoro(ethyl) vinyl ether (PEVE) and perfluoro(propyl)vinyl ether (PPVE), perfluoro(1,3-dioxole), perfluoro(2,2-dimethyl-1,3-dioxole) (PDD).

In another preferred embodiment, the VDF (co)polymer comprises (c) third recurring units derived from a third monomer different from VDF and also different from a second monomer.

In order to further improve the performance, various VDF copolymers have been studied and as non-limitative examples of the VDF (co)polymers useful in the present invention, mention can be notably made of homopolymers of VDF, VDF/TFE copolymers, VDF/TFE/HFP copolymers, VDF/TFE/CTFE copolymers, VDF/TFE/TrFE copolymers, VDF/CTFE copolymers, VDF/HFP copolymers, VDF/TFE/HFP/CTFE copolymers, and the like.

In a more preferred embodiment, the polymer according to the present invention comprises:
(a) at least 85% by moles of recurring units derived from VDF;
(b) from 0.1 to 15%, preferably from 0.1 to 12%, and more preferably from 0.1 to 10% by moles of recurring units derived from vinyl fluoride, chlorotrifluoroethylene (CTFE), hexafluoropropene (HFP), tetrafluoroethylene (TFE), perfluoromethylvinylether (PMVE), trifluoroethylene (TrFE) or mixtures thereof,
wherein all the aforementioned % by moles is referred to the total moles of recurring units of the polymer.

In one particular embodiment, the polymer according to the present invention comprises
(a) at least 85% by moles of recurring units derived from VDF; and
(b) from 0.1 to 15% by moles of recurring units derived from HFP, wherein all the aforementioned % by moles is referred to the total moles of recurring units of the polymer.

In another more preferred embodiment, the polymer according to the present invention comprises:
(a) less than 85% by moles of recurring units derived from VDF;
(b) at least 15% by moles of recurring units derived from vinyl fluoride, chlorotrifluoroethylene (CTFE), hexafluoropropene (HFP), tetrafluoroethylene (TFE), perfluoromethylvinylether (PMVE), trifluoroethylene (TrFE) or mixtures thereof,
wherein all the aforementioned % by moles is referred to the total moles of recurring units of the polymer.

The VDF polymer may be amorphous or semi-crystalline.

The term "amorphous" is hereby intended to denote a polymer having a heat of fusion of less than 5 J/g, preferably of less than 3 J/g, and more preferably of less than 2 J/g as measured by Differential Scanning Calorimetry (DSC) at a heating rate of 10°C/min according to ASTM D-3418-08.

The term "semi-crystalline" is hereby intended to denote a polymer having a heat of fusion of from 10 to 90 K/g, preferably of from 30 to 60 J/g, and more preferably of from 35 to 55 J/g, as measured according to ASTM D3418-08.

Non-limitative examples of suitable polymer comprising at least 85% by moles of recurring units derived from VDF include, notably, those commercially available under the trademark name SOLEF^{®} from Solvay Specialty Polymers Italy S.p.A.

Non-limitative examples of suitable polymer comprising less than 85% by moles of recurring units derived from VDF include, notably, fluoroelastomers, those commercially available under the trademark names of TECNOFLON^{®}FKM, TECNOFLON^{®} PFR, and TECNOFLON^{®} NH from Solvay Specialty Polymers Italy S.p.A.

Defects, end chains, impurities, chains inversions or branching and the like may be additionally present in the VDF polymer in addition to the said recurring units, without these components substantially modifying the behaviour and properties of the VDF polymer.

### Alkylene carbonate (co)polymer

In the present invention, the alkylene carbonate (co)polymer refers to a polymer essentially made of the recurring units derived from alkylene carbonate.

Non limitative examples of alkylene carbonates comprise ethylene carbonate, propylene carbonate, butylene carbonate, trimethylene carbonate, cyclohexene carbonate, and bisphenol A, B, and F carbonate.

In one embodiment, the i) at least one polymer according to the present invention has recurring units derived from ethylene carbonate, propylene carbonate, butylene carbonate, trimethylene carbonate, cyclohexene carbonate, bisphenol carbonate or mixtures thereof.

### Polyacrylonitrile (PAN)

In the present invention, the polyacrylonitrile (co)polymer refers to a polymer essentially made of the recurring units derived from acrylonitrile.

In one embodiment, the i) at least one polymer according to the present invention is a PAN.

In another embodiment, the i) at least one polymer comprises recurring units derived from acrylonitrile and recurring units derived from styrene, butadiene, acrylate, methyl acrylate, vinyl acetate or mixtures thereof.

Non limitative examples of PAN copolymers comprise styrene-acrylonitrile (SAN) copolymer, acrylonitrile-styrene-acrylate (ASA), poly(acrylonitrile-co-methyl acrylate) (PAN-MA), acrylonitrile butadiene styrene (ABS) copolymer and acrylonitrile-butadiene rubber (NBR).

### Polysiloxane (a.k.a. Silicone resin)

In one embodiment, the i) at least one polymer according to the present invention is a polysiloxane or a silicone resin, which is a polymer essentially made of siloxanes (-R₂Si-O-SiR₂-, where each R group is independently an organic group, an H-atom or an O atom). Polysiloxane often has side groups, such as methyl and phenyl. Other alkyl side groups can also be used. Of particular interest can be silicone resins, where part of the alkyl side groups have functional groups including at least one ethylene oxide groups, nitrile side groups or the like.

In another embodiment, a polysiloxane is a fluorinated silicone resin.

In a particular embodiment, the i) at least one polymer comprises recurring units derived from dimethyldichlorosilane, methyltrimethoxysilane, methyltrichlorosilane or mixtures thereof.

In a particular embodiment, the i) at least one polymer according to the present invention is poydimethylsiloxane (PDMS).

### Acrylate (co)polymer

In one embodiment, the i) at least one polymer according to the present invention is an acrylate (co)polymer.

In another embodiment, the i) at least one polymer comprises recurring units derived from acrylate, methacrylate, cyanoacrylate or mixtures thereof.

### Caprolactone (co)polymer

In the present invention, the caprolactone (co)polymer refers to a polymer essentially made of the recurring units derived from caprolactone.

### Sulfide-based solid ionic conducting inorganic particle

In the present invention, the term "sulfide-based solid ionic conducting inorganic particle" is not particularly limited as long as it is a solid electrolyte material containing sulfur atom(s) in the molecular structure or in the composition.

The sulfide-based solid ionic conducting inorganic particle preferably contains Li, S, and an element of 13 to 15 groups, for instance, P, Si, Sn, Ge, Al, As, Sb, or B, to increase Li-ion conductivity.

The sulfide-based solid ionic conducting inorganic particle according to the present invention is more preferably selected from the group consisting of:
- lithium phosphorus sulfide ("LPS") materials, such as glass, crystalline or glass-ceramic of those of formula (Li₂S)ₓ-(P₂S₅)_{y}, wherein x+y=1 and 0≤x≤1, Li₇P₃S₁₁, Li₇PS₆, Li₄P₂S₆, Li₉.₆P₃S₁₂ and Li₃PS₄;
- doped LPS, such as Li₂CuPS₄, Li₁₊₂ₓZn₁₋ₓPS₄, wherein 0≤x≤1, Li_{3.33}Mg_{0.33}P₂S₆, and Li₄₋₃ₓScₓP₂S₆, wherein 0≤x≤1;
- lithium phosphorus sulfide oxygen ("LPSO") materials of formula LiₓP_{y}S_{z}O, wherein 0.33≤x≤0.67, 0.07≤y≤0.2, 0.4≤z≤0.55;
- lithium phosphorus sulfide materials including X ("LXPS"), wherein X is Si, Ge, Sn, As, or Al, such as Li₁₀SnP₂S₁₂,Li₁₀GeP₂S₁₂, Li₁₀SiP₂S₁₂, and Li₂S-P₂S₅-SnS;
- lithium phosphorus sulfide oxygen including X ("LXPSO"), wherein X is Si, Ge, Sn, As, or Al;
- lithium silicon sulfide ("LSS") materials, such as Li₂SiS₃, Li₂S-P₂S₅-SiS₂, Li₂S-P₂S₅-SiS₂-LiCl, Li₂S-SiS₂-P₂S₅, Li₂S-SiS₂-P₂S₅-LiI, Li₂S-SiS₂-LiI, Li₂S-SiS₂, Li_{9.54}Si_{1.74}P_{1.44}S_{11.7}Cl_{0.3}, and Li₂S-SiS₂-Al₂S₃;
- lithium boron sulfide materials, such as Li₃BS₃ and Li₂S-B₂S₃-LiI;
- lithium tin sulfide materials and lithium arsenide materials, such as Li_{0.8}Sn_{0.8}S₂, Li₄SnS₄, Li_{3.833}Sn_{0.833}As_{0.166}S₄, Li₃AsS₄-Li₄SnS₄, and Ge-substituted Li₃AsS₄;
- lithium phosphorus sulfide materials including X ("LPSX"), wherein X is halogen, such as Li₄PS₄Cl,Li₁₅P₃S₁₆Cl₃, Li₇P₂S₈Cl, and Li₇P₂S₈I;
- Argyrodite-type sulfide materials of formula Li₆PS₅Y, wherein Y is Cl, Br or I , the compounds being possibly deficient in sulfur, lithium or halogen, for instance Li₆₋ₓPS₅₋ₓCl₁₊ₓ with 0≤x≤0.5, or doped with a heteroatom;
- Li₂S-GeS₂-ZnS, Li₃SbS₄, Na₃PS₄, Na₁₀SnP₁₂S₁₂, and Na₁₁Sn₂PS₁₂; and
- blends thereof.

Preferably, the sulfide-based solid ionic conducting inorganic particle according to the present invention doesn't contain residual Li₂S.

More preferably, the sulfide-based solid ionic conducting inorganic particle according to the present invention is free of P₂S₇⁴⁻ building blocks and/or composed uniquely of PS₄³⁻ building blocks.

Particularly preferred sulfide-based solid ionic conducting particles are lithium tin phosphorus sulfide ("LSPS") materials (e.g., Li₁₀SnP₂S₁₂) and Argyrodite-type sulfide materials (e.g., Li₆PS₅Cl).

In the present invention, an amount of the ii) at least one sulfide- based solid ionic conducting inorganic particle is from 40.0 to 98.0 wt%, preferably from 60.0 to 97.0 wt%, and more preferably from 70.0 to 96.0 wt%, based on the total weight of the solid composite electrolyte

### Lithium salt

The lithium salt is described as a lithium ion complex such as lithium hexafluorophosphate (LiPF₆), lithium perchlorate (LiClO₄), lithium hexafluoroarsenate (LiAsF₆), lithium hexafluoroantimonate (LiSbF₆), lithium hexafluorotantalate (LiTaF₆), lithium tetrachloroaluminate (LiAlCl₄), lithium tetrafluoroborate (LiBF₄), lithium chloroborate (Li₂B₁₀Cl₁₀), lithium fluoroborate (Li₂B₁₀F₁₀), Li₂B₁₂FₓH₁₂₋ₓ wherein x=0-12 ; LiPFₓ(R_{F})₆₋ₓ and LiBF_{y}(R_{F})_{4-y} wherein R_{F} represents perfluorinated C₁-C₂₀ alkyl groups or perfluorinated aromatic groups, x=0-5 and y=0-3, LiBF₂[O₂C(CX₂)ₙCO₂], LiPF₂[O₂C(CX₂)ₙCO₂]₂, LiPF₄[O₂C(CX₂)ₙCO₂] wherein X is selected from the group consisting of H, F, Cl, C₁-C₄ alkyl groups and fluorinated alkyl groups, and n=0-4, lithium trifluoromethane sulfonate (LiCF₃SO₃), lithium bis(fluorosulfonyl)imide Li(FSO₂)₂N (LiFSI), LiN(SO₂CₘF₂ₘ₊₁)(S**₂**CₙF₂ₙ₊₁) and LiC(SO₂CₖF₂ₖ₊₁)(SO₂CₘF₂ₘ₊₁)(SO₂CₙF₂ₙ₊₁) wherein k=1-10, m=1-10 and n=1-10, LiN(SO₂CpF₂ₚSO₂) and LiC(SO₂CpF₂ₚSO₂)(SO₂C_{q}F_{2q+1}) wherein p=1-10 and q=1-10, lithium salts of chelated orthoborates and chelated orthophosphates such as lithium bis(oxalato)borate [LiB(C₂O₄)₂], lithium bis(malonato)borate [LiB(O₂CCH₂CO₂)₂], lithium bis(difluoromalonato) borate [LiB(O₂CCF₂CO₂)₂], lithium (malonatooxalato) borate [LiB(C₂O₄)(O₂CCH₂CO₂)], lithium (difluoromalonatooxalato) borate [LiB(C₂O₄)(O₂CCF₂CO₂)], lithium tris(oxalato) phosphate [LiP(C₂O₄)₃], lithium tris(difluoromalonato) phosphate [LiP(O₂CCF₂CO₂)₃], lithium difluorophosphate (LiPO₂F₂), lithium 2-trifluoromethyl-4,5-dicyanoimidazole (LiTDI), and mixtures of the foregoing.

The preferred lithium salts are lithium hexafluorophosphate (LiPF₆), lithium bis(fluorosulfonyl)imide Li(FSO₂)₂N (LiFSI), lithium 2-trifluoromethyl-4,5-dicyanoimidazole (LiTDI), LiBF₄, LiB(C₂O₄)₂, LiAsF₆, LiClO₄, LiNO₃, lithium bis(oxalato)borate, LiCF₃SO₃, LiN(SO₂CF₃)₂ (LiTFSI), LiN(SO₂C₂F₅)₂, LiC(SO₂CF₃)₃, LiN(SO₃CF₃)₂, LiC₄F₉SO₃, LiCF₉₃SO₃, LiAlCl₄, LiSbF₆, LiF, LiBr, LiCl, LiOH, LiPFSi, and lithium trifluoromethanesulfonate

The more preferred lithium salts are lithium hexafluorophosphate (LiPF₆), lithium bis(fluorosulfonyl)imide LiN(SO₂CF₃)₂ (LiTFSI), and lithium bis(fluorosulfonyl)imide Li(FSO₂)₂N (LiFSI), which may be used alone or in combination.

A person skilled in the art may easily define the correct Li salt content in the organic (polymer) phase to maximize the ionic conductivity and the mechanical properties, which may largely vary depending on the nature of the polymer and the Li salt used. In one embodiment, the wt% of the ii) at least one Li salt in the i) at least one polymer varies between 10 and 80 wt%, preferably from 15 to 60 wt% and more preferably from 20 to 40 wt% with respect to the total weight of the solid polymer electrolyte.

In the present invention, additives may be additionally present in the solid composite electrolyte. Examples of other additives include, but not limited to, cathode protection agents, LiPF₆ salt stabilizer, safety protection agent, dispersant, Li deposition improver, ionic salvation enhancer, Al corrosion inhibitor, wetting agent, viscosity diluter, anti-swelling agents, low temperature or high temperature performance enhancers.

According to one embodiment, the solid composite electrolyte according to the present invention comprises:
- from 1.5 to 50.0 wt% of i) at least one polymer;
- from 40.0 to 98.0 wt% of ii) at least one sulfide-based solid ionic conducting inorganic particle; and
- from 0.5 to 35 wt% of iii) at least one lithium salt,
based on the total weight of the solid composite electrolyte.

According to one embodiment, the solid composite electrolyte comprises
- from 1.5 to 39.0 wt% of VDF/HFP copolymer;
- from 60.0 to 97.0 wt% of LSPS or LPSCl; and
- from 0.75 to 20 wt% of LiTFSI,
based on the total weight of the solid composite electrolyte

According to one embodiment, the solid composite electrolyte comprises
- from 1.5 to 50 wt% of PEC (polyethylene carbonate);
- from 40.0 to 98.0 wt% of LSPS or LPSCl; and
- from 0.5 to 40 wt% of LiTFSI,
based on the total weight of the solid composite electrolyte

According to one embodiment, the solid composite electrolyte comprises
- from 1.5 to 39.0 wt% of PAN (polyacrylonitrile);
- from 60.0 to 97.0 wt% of LSPS or LPSCl; and
- from 0.75 to 20 wt% of LiTFSI,
based on the total weight of the solid composite electrolyte

A second object of the invention is a slurry for manufacturing a solid composite electrolyte comprising i) at least one polymer, ii) at least one sulfide-based solid ionic conducting inorganic particle, iii) at least one lithium salt as detailed above, and iv) at least one polar aprotic solvent.

There are no specific restrictions imposed on the polar aprotic solvents as long as i) the solvent is able to dissolve both the Li salt and the polymer, and ii) the solvent is compatible with the solid electrolyte/sulfide particles, meaning the solvent has no negative impact on the ionic conductivity of the solid electrolyte. While the high polarity of the solvent, preferably with high dielectric constant is requested for dissolving both the Li salt and the polymer, the absence of electrophilic moieties is preferable to limit the interaction with the sulfides particles, so to avoid their deterioration.

In one embodiment, the iv) polar aprotic solvent comprises nitrile-containing solvents, ethers, esters, thiols and thioethers, ketones, tertiary amines and the like.

In one preferred embodiment, the iv) polar aprotic solvent comprises nitrile containing solvents with general formula of R-CN, where R represents an alkyl group. Non-limiting examples of nitrile-containing solvents are acetonitrile, butyronitrile, valeronitrile, isobutylnitrile and the like.

In another preferred embodiment, the iv) polar aprotic solvent is an ether with general formula of R₁-O-R₂, where R₁ and R₂ represent independently an alkyl group. Included in the ether solvents are cyclic ethers based on 3, 5 or 6-membered rings. The cyclic ethers can be substituted with alkyl groups, can have unsaturation and can have additional functional elements such as nitrogen or oxygen atoms inside the ring. Non-limiting examples of (cyclic) ether solvents are diethylether, 1,2-dimethoxyether, cyclopentyl methyl ether, dibutyl ether, anisole, tetrahydrofuran, methyl tetrahydrofuran, tetrahydropyran and the like.

In another preferred embodiment, the iv) polar aprotic solvent is an ester with general formula of R₃-COOR₄, where R₃ and R₄ represents independently an alkyl group. Non-limiting examples of ester solvents are butyl butyrate, ethyl benzoate and the like.

In another preferred embodiment, the iv) polar aprotic solvent is a ketone with general formula of R₅R₆CO, where R₅ and R₆ represents independently an alkyl group. Non-limiting examples of ketone solvents are methyl ethyl ketone, methyl isobutyl ketone, di-isobutyl ketone, acetophenone, benzophenone and the like.

In another preferred embodiment, the iv) polar aprotic solvent is a thiol (R₇=S-H) or thioether with general formula of R₈-S-R₉, where R₈ and R₉ are independently an alkyl group. Included in the thioether solvents are cyclic thioethers based on 3, 5 or 6 membered rings. The cyclic thioethers can be substituted with alkyl groups, can have unsaturation and can have additional functional elements such as nitrogen or oxygen atoms inside the ring. Non-limiting examples of thiol solvents are ethanethiol, tert-dodecyl mercaptan, thiophenol, t-butyl mercaptan, octanethiol, dimethyl sulfide, ethylmethylsulfide, methyl benzylsulfide and the like.

In another preferred embodiment, the iv) polar aprotic solvent is a tertiary amine with general formula of R₁₀R₁₁R₁₂N, where R₁₀, R₁₁ and R₁₂ represents independently an alkyl group. The N atom of the tertiary amine can be buried inside a 3, 5 or 6 membered ring. Non-limiting examples of tertiary amine solvents are triethylamine, dimethylbutylamine, tributylamine, cyclohexyldimethylamine, N-ethylpiperidine and the like.

In the present invention, the alkyl groups of R₁ to R₁₂ respectively refer to "alkyl groups" including saturated hydrocarbons having one or more carbon atoms, including straight-chain alkyl groups, such as methyl, ethyl, propyl, butyl, pentyl, hexyl, heptyl, octyl, nonyl, decyl, cyclic alkyl groups (or "cycloalkyl" or "alicyclic" or "carbocyclic" groups), such as cyclopropyl, cyclopentyl, cyclohexyl, cycloheptyl, and cyclooctyl, branched-chain alkyl groups, such as isopropyl, tert-butyl, sec-butyl, and isobutyl, and alkyl-substituted alkyl groups, such as alkyl-substituted cycloalkyl groups and cycloalkyl-substituted alkyl groups as defined above. Additionally, the alkyl groups may include functional groups such as 1 or more unsaturation, ethers, carbonyl, carboxyl, hydroxyl, thio, thiol, thioxy, sulfo, nitrile, nitro, nitroso, azo, amide, imide, amino, imino or halogen.

In a preferred embodiment, the iv) polar aprotic solvent comprises nitrile-containing solvents, such as acetonitrile and ethers, such as tetrahydrofuran (THF), 2-methyl-THF, 2,5-dimethyl-THF, 1,3-dioxolane, diethyl ether and 1,2-dimethoxyether, and esters, such as butyl butyrate.

In one embodiment, the slurry may further comprise an apolar aprotic solvent as a second solvent. Typical apolar aprotic solvents are saturated hydrocarbons and aromatic hydrocarbons such as, but not limited to, linear and branched alkanes (e.g., heptane), cyclic alkanes (e.g., cyclohexane), and aromatics (e.g., xylene and toluene).

A third object of the present invention is a solid state battery comprising the solid composite electrolyte as described above.

A fourth object of the present invention is the use of the solid composite electrolyte as described above, in an electrolyte and/or an electrode of a solid state battery for improving ionic conductivity and mechanical properties.

Should the disclosure of any patents, patent applications, and publications which are incorporated herein by reference conflict with the description of the present application to the extent that it may render a term unclear, the present description shall take precedence.

The invention will be now explained in more details with reference to the following examples, whose purpose is merely illustrative and not intended to limit the scope of the invention.

### EXAMPLES

### Raw Materials

### Sulfide materials:

- LSPS (NANOMYTE^{®} SSE-10 available from NEI Corporation)
- LPSCl (Ampcera^{™} Argyrodite Li₆PS₅Cl (D50: about 10 µm) as fine Powder, available from MSE supplies)

### Polymers:

- PVDF A: SOLEF^{®}21216, available from Solvay Specialty Polymers Italy S.p.A
- PVDF B: TECNOFLON^{®}NH, available from Solvay Specialty Polymers Italy S.p.A
- PEO homopolymer (600 kDa, available from Sigma Aldrich)
- PEC (QPAC^{®} 25, available from Empower Materials)
- PAN: (Poly(styrene-co-acrylonitrile) (30 wt% of acrylonitrile), available from Sigma Aldrich)
- SEBS (Tuftec^{™}N504, available from Asahi Kasei Chemicals Corp.) Li salt
- LiTFSI (lithium bis(trifluoromethanesulfonyl)imide), available from Solvay)

### Ionic conductivity

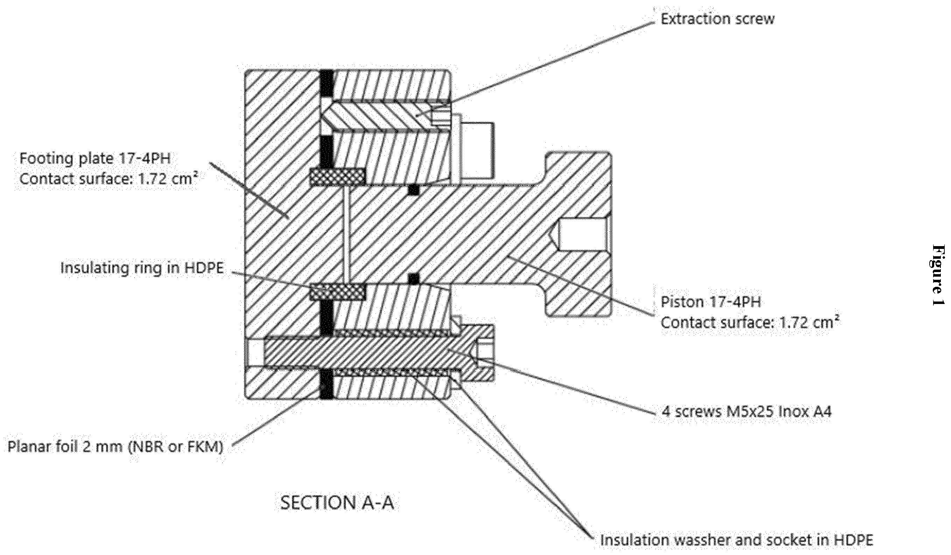

The ionic conductivity of the films were measured by AC impedance spectroscopy with an in-house developed pressure cell, where the film is pressed between two stainless steel electrodes during impedance measurements. A cross section of the pressure cell is shown in Figure 1.

The impedance spectra of the solid composite electrolyte according to Inventive Example 1 were determined at a pressure of 83 MPa and at a temperature of 20°C.

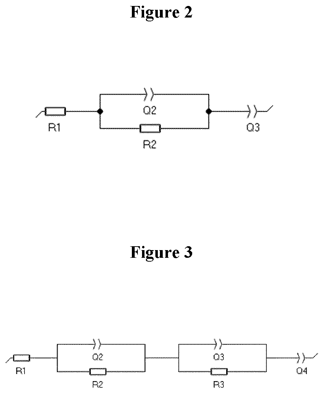

The Nyquist plot of the composite electrolyte membranes showed the typical behavior of a solid electrolyte (inorganic, polymer or composite) with a semicircle and Warburg-type impedance in the high and low frequency regions, respectively. The conductivity behavior of the composite electrolyte was modeled according to the equivalent circuit R1(R2/Q2)Q3 (see Figure 2) in which R is a resistance and Q a constant phase element. R1 and R2 represent the bulk and grain boundary resistance respectively, and Q2 and Q3 represent the grain boundary and electrode contributions respectively.

The intercept of the semicircle with the real axis at high frequency was attributed to the bulk resistance (R1) and the intercept with the real axis at lower frequency was attributed to the total resistance (R1 + R2) of the films. This total resistance, R, is conventionally used to calculate the conductivity of the solid electrolyte. Accordingly, the ionic conductivity σ was obtained using the equation of σ = d /(R x A), wherein d is the thickness of the film and A is the area of the stainless steel electrode.

Due to the chemical incompatibility between PEO and the sulfides, the Nyquist plots showed a second semicircle, attributed to a resistive interface layer, formed between the solid electrolyte particles and the PEO-based polymer electrolyte binder. The conductivity behavior of the composite electrolyte with the PEO/LiTFSI based polymer electrolytes was modelled according to the equivalent circuit R1+(R2/Q2)+(R3/Q3)+Q4 (see Figure 3) in which R is a resistance and Q a constant phase element. The total resistance (R1+R2+R3) was taken to calculate the ionic conductivity using the same equation of σ = d /(R x A), wherein d is the thickness of the film and A is the area of the stainless steel electrode.

The ionic conductivity of the composite electrolyte films with different solid electrolytes, polymer electrolytes and non-conductive binders are recorded in Table 1 below.

Ionic conductivity may be characterized via ionic resistance/conductivity. The SI unit of ionic resistance is the ohm-meter (Ω·m) and that of ionic conductivity is Siemens per meter (S/m), wherein S is ohm⁻¹.

### Inventive Example 1 (Ex 1):

Solid composite electrolyte composed of sulfide-based solid ionic conducting inorganic particle (LSPS, NANOMYTE^{®} SSE-10; NEI Corporation) and a polymer electrolyte (LiTFSI and Solef^{®}21216) were produced as the following:
LiTFSI and PVDF A were dissolved in ACN (acetonitrile) in order to obtain a solution where 3.6 wt% of polymer and 20 wt% of LiTFSI with respect to the polymer is added. 5.9 g of solid electrolyte in powder was added to 7 g of the polymer solution and mixed with a rotor stator. The obtained slurry was cast on an Al support and dried at ambient temperature followed by vacuum drying at 80°C overnight.

The Nyquist plots didn't show any sign of solid electrolyte decomposition by the polymer.

### Inventive Examples 2-4 (Ex 2-4):

Ex 2-4 were produced in the same way as Ex 1, with LSPS and a polymer electrolyte as conductive binder (PVDF A-LiTFSI), with the exception that the salt concentrations were different in the polymer electrolyte and THF (tetrahydrofuran) was used instead of ACN. The polymer electrolyte contained 20 wt%, 40 wt%, and 60 wt% of LiTFSI for Ex 2-4, respectively. Throughout the Examples, the solid content of the slurries were adapted in order to optimize their viscosity for the casting process.

LSPS composites with PVDF A-based polymer electrolytes showed excellent ionic conductivities and chemical compatibility with the sulfides.

### Inventive Example 5 (Ex 5):

Same procedure as in Ex 4 was followed, with the exceptions that LPSCl was used instead of LSPS as sulfide-based solid ionic conducting particle and acetonitrile was used as a solvent instead of tetrahydrofuran.

### Inventive Example 6 (Ex 6):

Same procedure as in Ex 5, but with different PVDF A and LiTFSI concentrations.

### Inventive example 7 (Ex 7):

LiTFSI and PVDF B were dissolved in butyl butyrate in order to obtain a solution where 5 wt% of polymer and 20 wt% of LiTFSI with respect to the polymer is added. 5.8 g of LPSCl solid electrolyte in powder was added to 5 g of the polymer solution and mixed with a rotor stator. The obtained slurry was cast on an Al support and dried at ambient temperature followed by vacuum drying at 80°C overnight.

### Inventive Examples 8 (Ex 8):

Solid composite electrolyte composed of sulfide-based solid ionic conducting inorganic particle (LSPS) and a polymer electrolyte (LiTFSI and PEC) were produced as the following:
LiTFSI and PEC were dissolved in ACN in order to obtain a solution where 3 wt% of polymer and 80 wt% of LiTFSI with respect to the polymer is added. 3 g of solid electrolyte in powder was added to 2 g of the polymer solution and mixed with a rotor stator. The obtained slurry was cast on a polyimide support and dried at ambient temperature followed by vacuum drying at 80°C overnight.

The Nyquist plots didn't show any sign of solid electrolyte decomposition by the polymer.

### Inventive Examples 9-13 (Ex 9-13):

Ex 9-13 were produced in the same way as Ex 8, with LSPS and a polymer electrolyte as conductive binder (PEC-LiTFSI), with the exception that the polymer and/or salt concentrations were different in the composite electrolyte.

### Inventive Examples 14 (Ex 14):

Same procedure as in Ex 9-13 was followed, with the exception that LPSCl was used instead of LSPS as sulfide-based solid ionic conducting particle.

### Inventive example 15 (Ex 15):

Solid composite electrolyte composed of sulfide-based solid ionic conducting inorganic particle (LPSCl) and a polymer electrolyte (LiTFSI and PAN) were produced as the following:
LiTFSI and PAN were dissolved in ACN in order to obtain a solution where 5 wt% of polymer and 30 wt% of LiTFSI with respect to the polymer is added. 3.3 g of solid electrolyte in powder was added to 2.5 g of the polymer solution and mixed with a rotor stator. The obtained slurry was cast on an Al support and dried at ambient temperature followed by vacuum drying at 80°C overnight.

All the compositions of the resulting composites of Ex 1-15 are mentioned in the below Table 1, together with the ionic conductivity.

**Table 1**

| | Sulfide (wt%) | Polymer (wt%) | Li salt (wt%) | Conductivity (mS/cm) |
|---|---|---|---|---|
| Ex 1 | LSPS (95.0) | PVDF A (4.0) | LiTFSI (1.0) | 0.81 |
| Ex 2 | LSPS (89.0) | PVDF A (8.8) | LiTFSI (2.2) | 0.44 |
| Ex 3 | LSPS (85.9) | PVDF A (8.4) | LiTFSI (5.7) | 0.16 |
| Ex 4 | LSPS (79.9) | PVDF A (8.0) | LiTFSI (12.1) | 0.17 |
| Ex 5 | LPSCl (79.9) | PVDF A (8.0) | LiTFSI (12.1) | 0.28 |
| Ex 6 | LPSCl (95.0) | PVDF A (4.0) | LiTFSI (1.0) | 0.46 |
| Ex 7 | LPSCl (95.1) | PVDF B (3.9) | LiTFSI (1.0) | 0.71 |
| Ex 8 | LSPS (90.9) | PEC (1.8) | LiTFSI (7.3) | 0.40 |
| Ex 9 | LSPS (64.5) | PEC (7.1) | LiTFSI (28.4) | 0.13 |
| Ex 10 | LSPS (80.0) | PEC (4.0) | LiTFSI (16.0) | 0.62 |
| Ex 11 | LSPS (80.0) | PEC (10.0) | LiTFSI (10.0) | 0.32 |
| Ex 12 | LSPS (64.6) | PEC (17.7) | LiTFSI (17.7) | 0.13 |
| Ex 13 | LSPS (91.0) | PEC (4.5) | LiTFSI (4.5) | 0.32 |
| Ex 14 | LPSCl (80.0) | PEC (4.0) | LiTFSI (16.0) | 0.30 |
| Ex 15 | LPSCl (95.0) | PAN (3.5) | LiTFSI (1.5) | 0.20 |

### Comparative Example 1 (CE1)

Solid composite electrolyte composed of LSPS and a LiTFSI/PEO polymer electrolyte were produced as the following:
0.054 g of LiTFSI and 0.154 g of PEO were dissolved in 9.846 g of ACN in order to obtain a polymer electrolyte solution. 2.923 g of LSPS was added to the solution and mixed. The obtained slurry was poured into a Teflon cup and dried at ambient temperature followed by vacuum drying at 80°C overnight.

### Comparative Examples 2-5 (CE2-CE5)

CE2-CE5 were produced in the same way as CE1, with the exception that the amounts of LSPS, PEO and LiTFSI were adapted in order to obtain composite electrolyte films with different amounts of PEO/LiTFSI polymer electrolyte.

The Nyquist plots of the LSPS composite membranes with PEO/LiTFSI polymer electrolyte binder (corresponding to CE1-CE5) showed a second semicircle, which can be attributed to the decomposition of the solid electrolyte by the PEO polymer (as evidenced by Riphaus et al.). As a result, it can be construed that an insulating layer was formed between the solid electrolyte particle and the PEO/LiTFSI polymer electrolyte, leading to a drastic reduction in overall ionic conductivity of the composite electrolytes compared to the composite electrolytes with a similar amount of VDF based polymer electrolytes binders (corresponding to E1-E5).

### Comparative Example 6 (CE6)

Solid composite electrolyte composed of LSPS and a LiTFSI/VDF-HFP polymer electrolyte were produced as the following:
Similar to Ex 1, LiTFSI and PVDF were dissolved in THF in order to obtain a solution where 5 wt% of polymer and 20 wt% of LiTFSI with respect to the polymer is added. 0.1 g of solid electrolyte in powder was added to 6 g of the polymer solution and mixed with a rotor stator. The obtained slurry was cast on an Al support and dried at ambient temperature followed by vacuum drying at 80°C overnight.

The composite electrolyte film as obtained was so resistive that the ionic conductivity couldn't be determined.

Instead, 10 µl of a liquid electrolyte (TEGDME [Tetrametylene glycol dimethyl ether]/dioxolane 50:50 with 1M LiTFSI) was added at either side of the composite membrane, i.e., between the composite electrolyte and the blocking electrodes of the pressure cell. With the addition of the liquid electrolyte, the resistivity of the composite electrolyte membrane changed drastically. The ionic conductivity of the as such obtained "gel" composite membrane was 5^{∗}10⁻³ mS/cm.

This data indicates that the ionic conductivity as measured originated from the organic phase (i.e., VDF-based polymer electrolyte in gel phase) and not from inorganic electrolyte (i.e., sulfide).

### Comparative Examples 7-9 (CE7-CE9)

Solid composite electrolyte composed of LSPS and PVDF were produced as the following:
A 5 wt% polymer solution in THF was produced without inclusion of Li salt. 3 g of LSPS in powder was added to 6 g of the polymer solution and mixed with a rotor stator. The obtained slurry was cast on an Al support and dried at ambient temperature followed by vacuum drying at 80°C overnight.

### Comparative Example 10 (CE10)

Solid composite electrolyte composed of LSPS and a hydrogenated thermoplastic styrenic elastomer (SEBS) were produced as the following:
0.1 g of SEBS was dissolved in 2.5 g of xylene. 1.9 g of LSPS was added to this polymer solution, cast on a Teflon support and dried at 50 °C. Complete solvent removal was assured by vacuum drying at 80°C. A free standing film was obtained.

### Comparative Example 11 (CE11)

CE13 was prepared in the same way as CE1 with the only difference of the amount of sulfide and SEBS.

As demonstrated by CE10 and CE11, the presence of a non-conductive binder resulted in a rapid decrease in ionic conductivity. LSPS composites with a hydrogenated binder exhibited much lower ionic conductivity as compared to the composite electrolytes (corresponding to Ex 1 - Ex 14) with a similar amount of polymer electrolyte.

All the compositions of the resulting composites of CE 1-11 are mentioned in the Table 2 below, together with the ionic conductivity.

**Table 2**

| | Sulfide (wt%) | Polymer (wt%) | Li salt | Conductivity (mS/cm) |
|---|---|---|---|---|
| CE1 | LSPS (95.0) | PEO (3.2) | LiTFSI (1.8) | 0.012 |
| CE2 | LSPS (90.0) | PEO (6.5) | LiTFSI (3.5) | 0.008 |
| CE3 | LSPS (80.0) | PEO (13.0) | LiTFSI (7.0) | 0.005 |
| CE4 | LSPS (70.0) | PEO (19.5) | LiTFSI (10.5) | 0.003 |
| CE5 | LSPS (50.0) | PEO (32.5) | LiTFSI (17.5) | 0.003 |
| CE6 | LSPS (21.1) | PVDF (63.2) | LiTFSI (15.8) | NA |
| CE7 | LSPS (90.9) | PVDF (9.1) | - | 0.14 |
| CE8 | LSPS (80.0) | PVDF (20.0) | - | 0.053 |
| CE9 | LSPS (70.0) | PVDF (30.0) | - | 0.016 |
| CE10 | LSPS (95.0) | SEBS (5.0) | - | 0.19 |
| CE11 | LSPS (90.0) | SEBS (10.0) | - | 0.06 |

All experiments were carried out under protected environment (Ar).

## Claims

1. A solid composite electrolyte comprising
i) at least one polymer;
ii) at least one sulfide-based solid ionic conducting inorganic particle; and
iii) at least one lithium salt,
wherein the i) at least one polymer is selected from the group consisting of (co)polymers having recurring units derived from vinylidene fluoride (VDF), alkylene carbonate, acrylonitrile, silane, fluorosilane, acrylate, caprolactone and blends thereof, and wherein an amount of the ii) at least one sulfide-based solid ionic conducting inorganic particle is from 40.0 to 98.0% by weight (wt%), preferably from 60.0 to 97.0 wt%, and more preferably from 70.0 to 96.0 wt%, based on the total weight of the solid composite electrolyte.

2. The solid composite electrolyte according to claim 1, wherein the ii) at least one sulfide-based solid ionic conducting inorganic particle comprises glass, crystalline or glass-ceramic of those of formula (Li₂S)ₓ-(P₂S₅)_{y}, wherein x+y=1 and 0≤x≤1, Li₇P₃S₁₁, Li₇PS₆, Li₄P₂S₆, Li_{9.6}P₃S₁₂ and Li₃PS₄; Li₂CuPS₄, Li₁₊₂ₓZn₁₋ₓPS₄, wherein 0≤x≤1, Li_{3.33}Mg_{0.33}P₂S₆, and Li₄₋₃ₓScₓP₂S₆, wherein 0≤x≤1; LiₓP_{y}S_{z}O, wherein 0.33≤x≤0.67, 0.07≤y≤0.2, 0.4≤z≤0.55; Li₁₀SnP₂S₁₂, Li₁₀GeP₂S₁₂, Li₁₀SiP₂S₁₂, and Li₂S-P₂S₅-SnS; lithium phosphorus sulfide oxygen including X ("LXPSO"), wherein X is Si, Ge, Sn, As, or Al; Li₂SiS₃, Li₂S-P₂S₅-SiS₂, Li₂S-P₂S₅-SiS₂-LiCl, Li₂S-SiS₂-P₂S₅, Li₂S-SiS₂-P₂S₅-LiI, Li₂S-SiS₂-LiI, Li₂S-SiS₂, Li_{9.54}Si_{1.74}P_{1.44}S_{11.7}Cl_{0.3}, and Li₂S-SiS₂-Al₂S₃; Li₃BS₃ and Li₂S-B₂S₃-LiI; Li_{0.8}Sn_{0.8}S₂, Li₄SnS₄, Li_{3.833}Sn_{0.833}As_{0.166}S₄, Li₃AsS₄-Li₄SnS₄, and Ge-substituted Li₃AsS₄; Li₄PS₄Cl Li₁₅P₃S₁₆Cl₃, Li₇P₂S₈Cl, and Li₇P₂S₈I; Argyrodite-type Li₆PS₅Y (Y = Cl, Br, or I); Li₂S-GeS₂-ZnS, Li₃SbS₄, Na₃PS₄, Na₁₀SnP₁₂S₁₂, and Na₁₁Sn₂PS₁₂; and blends thereof.

3. The solid composite electrolyte according to claim 2, wherein the ii) at least one sulfide-based solid ionic conducting inorganic particle comprises Argyrodite-type Li₆PS₅Y (Y = Cl, Br, or I) and Li₁₀SnP₂S₁₂.

4. The solid composite electrolyte according to any of claims 1 to 3, wherein the i) at least one polymer comprises
(a) at least 85% by moles of recurring units derived from VDF; and
(b) optionally from 0.1 to 15%, preferably from 0.1 to 12%, and more preferably from 0.1 to 10% by moles of recurring units derived from vinyl fluoride, chlorotrifluoroethylene (CTFE), hexafluoropropene (HFP), tetrafluoroethylene (TFE), perfluoromethylvinylether (PMVE), trifluoroethylene (TrFE) or mixtures thereof,
wherein all the aforementioned % by moles is referred to the total moles of recurring units of the polymer.

5. The solid composite electrolyte according to any of claims 1 to 3, wherein
(a) less than 85% by moles of recurring units derived from VDF;
(b) at least 15% by moles of recurring units derived from vinyl fluoride, chlorotrifluoroethylene (CTFE), hexafluoropropene (HFP), tetrafluoroethylene (TFE), perfluoromethylvinylether (PMVE), trifluoroethylene (TrFE) or mixtures thereof,
wherein all the aforementioned % by moles is referred to the total moles of recurring units of the polymer

6. The solid composite electrolyte according to any of claims 1 to 3, wherein the i) at least one polymer comprises recurring units derived from ethylene carbonate, propylene carbonate, butylene carbonate, trimethylene carbonate, cyclohexene carbonate, bisphenol A, B and F carbonate, or mixtures thereof.

7. The solid composite electrolyte according to any of claims 1 to 3, wherein the i) at least one polymer comprises recurring units derived from acrylonitrile and recurring units derived from styrene, butadiene, acrylate, methyl acrylate, vinyl acetate or mixtures thereof.

8. The solid composite electrolyte according to any of claims 1 to 3, wherein the i) at least one polymer comprises recurring units derived from dimethyl dichlorosilane, methyltrimethoxy silane, methyl trichlorosilane or mixtures thereof.

9. The solid composite electrolyte according to any of claims 1 to 3, wherein the i) at least one polymer comprises recurring units derived from acrylate, methacrylate, cyanoacrylate, caprolactone or mixtures thereof.

10. The solid composite electrolyte according to any of claims 1 to 9, wherein iii) at least one lithium salt comprises at least one selected from the group consisting of lithium hexafluorophosphate (LiPF₆), lithium bis(fluorosulfonyl)imide Li(FSO₂)₂N (LiFSI), lithium 2-trifluoromethyl-4,5-dicyanoimidazole (LiTDI), LiBF₄, LiB(C₂O₄)₂, LiAsF₆, LiClO₄, LiNO₃, lithium bis(oxalato)borate, LiCF₃SO₃, LiN(SO₂CF₃)₂ (LiTFSI), LiN(SO₂C₂F₅)₂, LiC(SO₂CF₃)₃, LiN(SO₃CF₃)₂, LiC₄F₉SO₃, LiCF₉₃SO₃, LiAlCl₄, LiSbF₆, LiF, LiBr, LiCl, LiOH, LiPFSi, and lithium trifluoromethanesulfonate.

11. The solid composite electrolyte according to any of claims 1 to 10, wherein the wt% of the ii) at least one Li salt in the i) at least one polymer varies in between 10 and 80 wt%, preferably from 15 to 60 wt%, and more preferably from 20 to 40 wt%.

12. A slurry for manufacturing a solid composite electrolyte comprising i) at least one polymer, ii) at least one sulfide-based solid ionic conducting inorganic particle, iii) at least one lithium salt according to any of claims 1 to 11, and iv) at least one polar aprotic solvent.

13. The slurry according to claim 12, wherein the iv) polar aprotic solvent comprises nitrile-containing solvents, such as acetonitrile and ethers, such as tetrahydrofuran (THF), 2-methyl-THF, 2,5-dimethyl-THF, 1,3-dioxolane, diethyl ether and 1,2-dimethoxyether, and esters, such as butyl butyrate.

14. A solid state battery comprising the solid composite electrolyte according to any of claims 1 to 11.

15. Use of the solid composite electrolyte according to any of claims 1 to 11, in an electrolyte or an electrode of a solid state battery for improving ionic conductivity and mechanical properties.
